# EUROPÄISCHE PATENTANMELDUNG

(11) **EP 4 116 349 A1**
(43) Veröffentlichungstag der Anmeldung: **11.01.2023**
(21) Anmeldenummer: 21184252.1
(22) Anmeldetag: 07.07.2021
(51) Int. Cl.: C08G 18/22, C08G 18/28, C08G 18/78, C08G 18/79, C08G 18/80, C09D 175/04

(54) **HYDROPHIL-MODIFIZIERTE SILAN- UND THIOALLOPHANATSTRUKTUREN AUFWEISENDE POLYISOCYANATE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine hydrophile Polyisocyanatzusammensetzung, umfassend eine Polyisocyanatkomponente A) und eine Emulgatorkomponente B), dadurch gekennzeichnet, dass die Polyisocyanatkomponente A) aus wenigstens einem Silan- und Thioallophanatstrukturen aufweisenden Polyisocyanat der allgemeinen Formel (I) 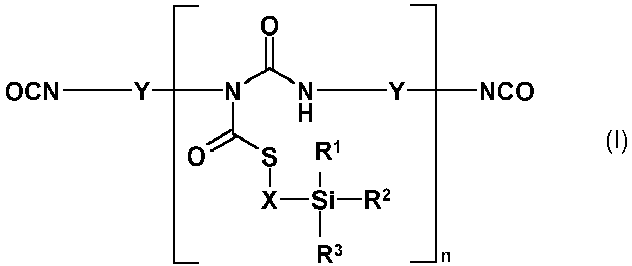 besteht, in welcher R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, X für einen linearen oder verzweigten organischen Rest mit mindestens 2 Kohlenstoffatomen steht, Y einen linearen oder verzweigten, aliphatischen oder cycloaliphatischen, einen araliphatischen oder aromatischen Rest mit bis zu 18 Kohlenstoffatomen bedeutet und n für eine ganze Zahl von 1 bis 20 steht, und die Emulgatorkomponente B) wenigstens einen ionischen und/oder nichtionischen Emulgator enthält.

## Beschreibung

Die Erfindung betrifft hydrophil-modifizierte Silan- und Thioallophanatstrukturen aufweisende Polyisocyanate, ein Verfahren zu ihrer Herstellung und ihre Verwendung zur Herstellung von Polyurethankunststoffen. Außerdem betrifft die Erfindung Beschichtungsmittel enthaltend die hydrophil-modifizierten Silan- und Thioallophanatstrukturen aufweisenden Polyisocyanate sowie die mit diesen Beschichtungsmitteln beschichteten und verklebten Substrate.

Hydrophil-modifizierte Silangruppen aufweisende Polyisocyanate und ihre Verwendung als Vernetzerkomponenten in wässrigen Zweikomponentensystemen sind bekannt.

EP 872 499 beschreibt wässrige zweikomponentige Bindemittelkombinationen auf Basis hydroxy- und/oder aminofunktioneller wasserverdünnbarer Harze sowie durch anteilige Umsetzung von Polyisocyanaten mit Aminoalkylalkoxysilanen erhaltene Isocyanat- und Alkoxysilylgruppen aufweisende Verbindungen als Vernetzer. Diese Zweikomponenten-Systeme kommen als Bindemittel in Lacken, Beschichtungen und Dichtmassen zur Anwendung. Die Emulgierbarkeit der Isocyanat- und Alkoxysilylgruppen aufweisende Vernetzerkomponenten in dem wässrigen Bindemittel wird durch Abmischen mit einem hydrophil modifizierten Polyisocyanat erreicht.

EP 949 284 offenbart hydrophil modifizierte Polyisocyanate mit einem definierten Gehalt an Isocyanat- und Alkoxysilangruppen, hergestellt durch Umsetzung von Polyisocyanaten mit sekundären Aminoalkylalkoxysilanen und hydrophilen nichtionischen oder ionischen Aufbaukomponenten, die es erlauben die so modifizierten Polyisocyanate stabil in Wasser zu dispergieren. Diese hydrophilen Alkoxysilan-modifizierten Polyisocyanate dienen als Vernetzerkomponenten für wässrige Dispersionen isocyanatreaktiver Polymere zur Herstellung von Beschichtungsmitteln, Klebstoffen oder Dichtstoffen.

EP 1 544 226 beschreibt wässrige Zweikomponenten-Klebstoffe, bestehend aus Umsetzungsprodukten von Polyisocyanaten mit unterschüssigen Mengen alkoxysilanfunktioneller Asparaginsäureester und Polyalkylenoxidpolyetheralkoholen sowie als zweiter Komponente aus einem Katalysator und/oder einem wässrigen Bindemittel. Die Klebstoffe dienen insbesondere zur Verklebung von Canvas oder Kunststoffen mit Substraten, wie Holz, Metallen, vorzugsweise Eisen oder Aluminium, Kunststoffen, Papier, Canvas, Keramik, Stein, Glas oder Beton.

Gegenstand der EP 2 414 419 sind Dispersionen anorganischer, gegebenenfalls oberflächenmodifizierter Nanopartikel in hydrophilierten Polyisocyanaten, die mit unterschüssigen Mengen gegenüber NCO-Gruppen reaktiven Alkoxysilanen modifiziert sind, und deren Verwendung als Vernetzer für hoch kratzfeste Beschichtungen. Die Alkoxysilan-Modifizierung des Polyisocyanats dient der Kompatibilisierung.

EP 842 991 beschreibt Grundierungen für Kleb- und Dichtstoffe, enthaltend Umsetzungsprodukte von Polyisocyanaten mit gegenüber Isocyanatgruppen reaktiven Emulgiermitteln, wie z. B. hydroxyfunktionellen Polyethylenoxidmonoalkylethern und - monoalkylarylethern, und gegenüber Isocyanaten reaktive Gruppen tragenden silanfunktionellen Verbindungen, insbesondere Mercaptoalkylsilanen, in Kombination mit wässrigen Bindemittel mit Kern-Schale-Struktur.

Den Produkten der EP 842 991 ähnliche wasseremulgierbare Polyisocyanate sind Gegenstand der EP 953 585. Ihre Herstellung erfolgt durch Umsetzung hydrophober Polyisocyanate, vorzugsweise Polyisocyanuratpolyisocyanate, mit vorzugsweise Mercaptosilanen als Kopplungsmittel und gegenüber NCO-Gruppen reaktiven nichtionischen Emulgatoren eines definierten HLB-Werts, insbesondere auf Alkylphenolen gestarteten Polyetheralkoholen. Diese wasseremulgierbaren Polyisocyanate, die gegebenenfalls zusätzlich 3-Glycidoxypropyltrimethoxysilan enthalten können, dienen u. a. als Vernetzer für wässrige Klebstoffe. Unter den zur Herstellung der silanfunktionellen Polyisocyanate angegebenen Reaktionsbedingungen, bei Temperaturen von 50 bis 90°C und ohne die Mitverwendung eines Katalyators, reagieren Mercaptosilane ausschließlich unter Bildung von Thiourethangruppen, Thioallophanatstrukturen entstehen nicht. Dies gilt auch für die nach dem Verfahren der in EP 842 991 erhältlichen Produkte.

Die bekannten hydrophil-modifizierten Silangruppen aufweisenden Polyisocyanate des Standes der Technik kommen beispielsweise zur Verbesserung der Kratzfestigkeit wässriger Lacksysteme oder der Erhöhung der Verbundfestigkeit von Verklebungen zum Einsatz, können dabei allerdings nicht allen Anforderungen der Praxis genügen. Sie sind beispielsweise als Vernetzerkomponenten für Klebstoffdispersionen zur Herstellung von Mehrschichtverbunden sehr hoher Wärmebeständigkeit und Verbundfestigkeit, wie sie beispielsweise für die Heißsterilisation verpackter Lebensmittel oder für das Abfüllen heißer Lebensmittel benötigt werden, nicht oder nur sehr bedingt geeignet.

Wie jetzt überraschend gefunden wurde, lassen sich unter Verwendung neuer hydrophil modifizierter Polyisocyanate, die Silan- und Thioallophanatstrukturen aufweisen, in Kombination mit wässrigen Klebstoffdispersionen zweikomponentige Polyurethandispersionsklebstoffe für Mehrschichtverbunde mit wenigstens einer Metallfolie formulieren, deren Verbundhaftung unter den Bedingungen der Dampfsterilisation nicht nur erhalten bleibt sondern sich sogar deutlich verbessert. Dies war besonders überraschend, da die neuen Silan- und Thioallophanatstrukturen aufweisenden hydrophilen Polyisocyanate aufgrund der bezüglich Isocyanat-Funktionalität strikt difunktionellen Ausgangspolyisocyanate nach der Hydrophilierung zum Teil deutlich niedrigere Isocyanat-Funktionalitäten aufweisen, als die bisher bekannten hydrophil-modifizierten Silangruppen aufweisenden Polyisocyanate.

Gegenstand der vorliegenden Erfindung sind hydrophile Polyisocyanatzusammensetzungen, umfassend eine Polyisocyanatkomponente A) und eine Emulgatorkomponente B), dadurch gekennzeichnet, dass die Polyisocyanatkomponente A) aus wenigstens einem Silan- und Thioallophanatstrukturen aufweisenden Polyisocyanat der allgemeinen Formel (I) 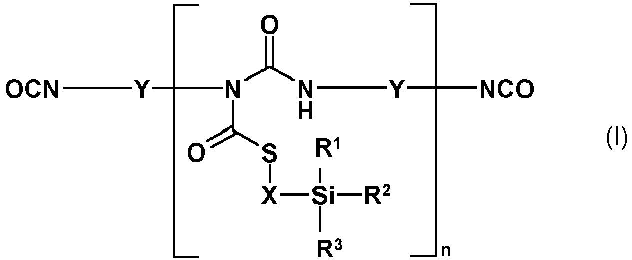 besteht, in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht,
- Y: einen linearen oder verzweigten, aliphatischen oder cycloaliphatischen, einen araliphatischen oder aromatischen Rest mit bis zu 18 Kohlenstoffatomen bedeutet und
- n: für eine ganze Zahl von 1 bis 20 steht,
und die Emulgatorkomponente B) wenigstens einen ionischen und/oder nichtionischen Emulgator enthält.

Gegenstand der Erfindung ist auch ein Verfahren zur Herstellung dieser hydrophilen Polyisocyanatzusammensetzungen und ihre Verwendung zur Herstellung von Polyurethankunststoffen.

Silangruppen enthaltende Thioallophanatpolyisocyanate A) sind bekannt und beispielsweise in WO 2015/189164 beschrieben. Es handelt sich dabei insbesondere um solche der allgemeinen Formel (I) 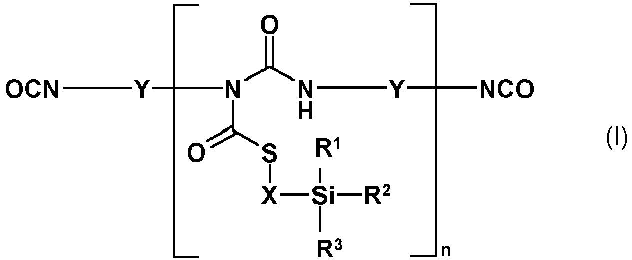 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht,
- Y: einen linearen oder verzweigten, aliphatischen oder cycloaliphatischen, einen araliphatischen oder aromatischen Rest mit bis zu 18 Kohlenstoffatomen bedeutet und
- n: für eine ganze Zahl von 1 bis 20 steht.

Die Herstellung solcher Silangruppen enthaltenden Thioallophanate ist ebenfalls bekannt und nicht Gegenstand dieser Anmeldung. Sie erfolgt durch Umsetzung
C) mindestens eines monomeren Diisocyanates der allgemeinen Formel (II)

   **OCN-Y-NCO** (II),

   in welcher Y einen linearen oder verzweigten, aliphatischen oder cycloaliphatischen, einen araliphatischen oder aromatischen Rest mit bis zu 18 Kohlenstoffatomen bedeutet, mit
D) Mercaptosilanen der allgemeinen Formel (III) 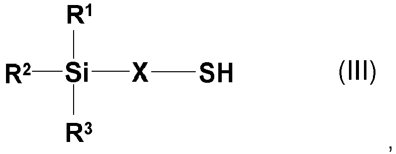 in welcher
   R¹, R², R³ und X die oben genannte Bedeutung haben,

in einem Äquivalentverhältnis von Isocyanatgruppen zu Mercaptogruppen von 2 : 1 bis 40 : 1. Als Ausgangsverbindungen C) zur Herstellung der Silangruppen enthaltenden Thioallophanatpolyisocyanate A) sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete Diisocyanate sind beispielsweise solche der allgemeinen Formel (II)

**OCN-Y-NCO** (II),

in welcher Y für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 6 bis 18 Kohlenstoffatomen steht, wie z. B. 1,4-Diisocyanatobutan, 1,5-Diisocyanatopentan, 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol (Xylylendiisocyanat, XDI), 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Als Ausgangskomponente C) besonders bevorzugt sind Diisocyanate der allgemeinen Formel (II), in welcher Y für einen linearen oder verzweigten, aliphatischen oder cycloaliphatischen Rest mit 5 bis 13 Kohlenstoffatomen steht.

Ganz besonders bevorzugte Ausgangskomponenten C) sind 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Ausgangskomponenten D) zur Herstellung der Silan- und Thioallophanatstrukturen aufweisenden Polyisocyanate A) sind beliebige Mercaptosilane der allgemeinen Formel (III) 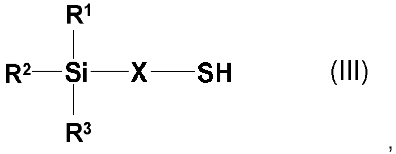 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
- X: für einen linearen oder verzweigten organischen Rest mit mindestens 2 Kohlenstoffatomen steht.

Geeignete Mercaptosilane D) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane D) zur Herstellung der Silan- und Thioallophanatstrukturen aufweisenden Polyisocyanate A) sind solche der allgemeinen Formel (III), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht.

Besonders bevorzugte Mercaptosilane D) sind solche der allgemeinen Formel (III), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
- X: für einen Propylenrest (-CH₂-CH₂-CH₂-) steht.

Ganz besonders bevorzugte Mercaptosilane D) sind solche der allgemeinen Formel (III), in welcher
- R¹, R² und R³: für gleiche oder verschiedene Reste stehen und jeweils Methyl, Methoxy oder Ethoxy bedeuten, mit der Maßgabe, daß mindestens einer der Reste R¹, R² und R³ für einen Methoxy- oder Ethoxyrest steht, und
- X: für einen Propylenrest (-CH₂-CH₂-CH₂-) steht.

Zur Herstellung der Silan- und Thioallophanatstrukturen aufweisenden Polyisocyanate A) werden die Diisocyanate (C) mit den Mercaptosilanen D) bei Temperaturen von 20 bis 200 °C, vorzugsweise 40 bis 160 °C, unter Einhaltung eines Äquivalentverhältnis von Isocyanatgruppen zu Mercaptogruppen von 2 : 1 bis 40 : 1, vorzugsweise von 4 : 1 bis 30 : 1, besonders bevorzugt 6 : 1 bis 20 : 1, zu Thioallophanaten umgesetzt.

Dies kann unkatalysiert als thermisch induzierte Thioallophanatisierung durchgeführt werden. Bevorzugt kommen zur Beschleunigung der Thioallophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung der Silan- und Thioallophanatstrukturen aufweisenden Polyisocyanate A) sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A 0 649 866 Seite 4, Zeile 7 bis Seite 5, Zeile 15 beschrieben.

Bevorzugte Katalysatoren zur Herstellung der Silan- und Thioallophanatstrukturen aufweisenden Polyisocyanate A) sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner C) und D) zum Einsatz und können sowohl vor Reaktionsbeginn als auch zu jedem Zeitpunkt der Reaktion zugesetzt werden.

Die Thioallophanatisierung wird vorzugsweise lösemittelfrei durchgeführt. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Herstellung der Silan- und Thioallophanatstrukturen aufweisenden Polyisocyanate A) kann in einer möglichen Ausführungsform so erfolgen, dass das Ausgangsdiisocyanat C) bzw. eine Mischung verschiedener Ausgangsdiisocyanate gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt wird. Anschließend wird das Mercaptosilan D) bzw. eine Mischung verschiedener Mercaptosilane in der oben angegebenen Menge zugegeben und die Reaktionstemperatur für die Thiourethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Thiourethanisierungsreaktion, d. h. wenn der einem vollständigen Umsatz von Isocyanat- und Mercaptogruppen theoretisch entsprechende NCO-Gehalt erreicht ist, kann die Thioallophanatisierung beispielsweise ohne Zusatz eines Katalysators durch Erhitzen des Reaktionsgemisches auf eine Temperatur von 120 bis 200°C gestartet werden. Vorzugsweise kommen zur Beschleunigung der Thioallophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 70 bis 120°C, zur Durchführung der Reaktion ausreichend sind.

In einer anderen möglichen Ausführungsform der Herstellung der Silan- und Thioallophanatstrukturen aufweisenden Polyisocyanate A) wird der gegebenenfalls mitzuverwendenden Katalysator entweder der Diisocyanatkomponente C) und/oder der Silankomponente D) bereits vor Beginn der eigentlichen Umsetzung zugemischt. In diesem Fall reagieren die sich intermediär bildenden Thiourethangruppen spontan weiter zur gewünschten Thioallophanatstruktur. Bei dieser Art der einstufigen Reaktionsführung werden die gegebenenfalls den Katalysator enthaltenden Ausgangsdiisocyanate C) gegebenenfalls unter Inertgas, wie beispielsweise Stickstoff, und gegebenenfalls in Gegenwart eines geeigneten Lösungsmittels der genannten Art, in der Regel bei für die Thioallophanatisierung optimalen Temperaturen im Bereich von 60 bis 140°C, vorzugsweise 70 bis 120°C, vorgelegt und mit der gegebenenfalls den Katalysator enthaltenden Silankomponente D) zur Reaktion gebracht.

Es ist aber auch möglich, den Katalysator dem Reaktionsgemisch zu einem beliebigen Zeitpunkt während der Thiourethanisierungsreaktion zuzusetzen. Bei dieser Ausführungsform der Herstellung der Silan- und Thioallophanatstrukturen aufweisenden Polyisocyanate A) wird für die vor der Katalysatorzugabe ablaufende reine Thiourethanisierungsreaktion in der Regel eine Temperatur im Bereich von 30 bis 120°C, vorzugsweise von 50 bis 100°C, eingestellt. Nach Zugabe eines geeigneten Katalysators wird die Thioallophantisierungreaktion schließlich bei Temperaturen von 60 bis 140°C, vorzugsweise von 70 bis 120°C, durchgeführt.

Der Verlauf der Umsetzung kann bei der Herstellung der Silan- und Thioallophanatstrukturen aufweisenden Polyisocyanate A) durch z. B. titrimetrische Bestimmung des NCO-Gehaltes verfolgt werden. Nach Erreichen des angestrebten NCO-Gehaltes, vorzugsweise wenn der Thioallophanatisierungsgrad (d. h. der aus dem NCO-Gehalt errechenbare prozentuale Anteil der zu Thioallophanatgruppen umgesetzten, aus den Mercaptogruppen der Komponente D) sich intermediär bildenden Thiourethangruppen) des Reaktionsgemisches mindestens 70 %, besonders bevorzugt mindestens 90 % beträgt, ganz besonders bevorzugt nach vollständiger Thioallophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Thioallophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform der Herstellung der Silan- und Thioallophanatstrukturen aufweisenden Polyisocyanate A) werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Aufarbeitung erhält man als Produkte klare, praktisch farblose Silan- und Thioallophanatstrukturen aufweisenden Polyisocyanate A), die in der Regel Farbzahlen von unter 120 APHA, vorzugsweise von unter 80 APHA, besonders bevorzugt von unter 60 APHA, und einen NCO-Gehalt von 2,0 bis 18,0 Gew.-%, vorzugsweise 7,0 bis 17,0 Gew.-%, besonders bevorzugt 10,0 bis 16,0 Gew.-%, aufweisen. Dabei beträgt die mittlere NCO-Funktionalität in Abhängigkeit vom Umsatzgrad und verwendetem Thioallophanatisierungskatalysator in der Regel von 1,8 bis 3,0, vorzugsweise von 1,8 bis 2,5, besonders bevorzugt von 1,9 bis 2,0,

Die erfindungsgemäßen, hydrophil-modifizierten Silan- und Thioallophanatstrukturen aufweisenden Polyisocyanate enthalten neben der Polyisocyanatkomponente A) mindestens einen ionischen und/oder nichtionischen Emulgator B).

Hierbei handelt es sich um beliebige grenzflächenaktive Stoffe, die aufgrund ihrer Molekülstruktur in der Lage sind, Polyisocyanate bzw. Polyisocyanatzusammensetzung in wässrigen Emulsionen über einen längeren Zeitraum, bevorzugt bis zu 8 Stunden, zu stabilisieren.

Die Herstellung der erfindungsgemäßen, hydrophil-modifizierten Silan- und Thioallophanatstrukturen aufweisenden Polyisocyanate erfolgt derart, dass die Silan- und Thioallophanatstrukturen aufweisenden Polyisocyanate A) mit der Emulgatorkomponente B) vermischt werden oder dass die Emulgatorkomponente B) durch anteilige Umsetzung von Polyisocyanatenmolekülen der Polyisocyanatkomponente A) mit ionischen und/oder nichtionischen Verbindungen, die gegenüber Isocyanatgruppen reaktive Gruppen tragen, in der Polyisocyanatkomponente A) gebildet wird.

Eine bevorzugte Art nichtionischer Emulgatoren B) stellen beispielsweise Umsetzungsprodukte B1) der Silan- und Thioallophanatstrukturen aufweisenden Polyisocyanate A) mit hydrophilen Polyetheralkoholen dar.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n Tetradecanol, n-Hexadecanol, n-Octadecanol, Cyclohexanol, die isomeren Methyl-cyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pen-tandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher bevorzugter nichtionischer Emulgatoren B1) ist prinzipiell bekannt und beispielsweise in EP-B 0 206 059 und EP-B 0 540 985 beschrieben.

Sie kann durch Umsetzung der Silan- und Thioallophanatstrukturen aufweisenden Polyisocyanate A) mit den genannten Polyetheralkoholen entweder in einem separaten Reaktionsschritt mit anschließendem Vermischen des erhaltenen Emulgators B1) mit den in eine hydrophile Form zu überführenden Polyisocyanatkomponenten A) oder aber in der Weise erfolgen, dass man die Polyisocyanatkomponenten A) mit einer entsprechenden Menge der Polyetheralkohole abmischt, wobei sich spontan ein erfindungsgemäßes hydrophiles Polyisocyanatgemisch bildet, das neben nicht umgesetztem Silan- und Thioallophanatstrukturen aufweisendem Polyisocyanat A) den sich in situ aus dem Polyetheralkohol und einem Teil der Komponente A) bildenden Emulgator B1) enthält.

Die Herstellung dieser Art nichtionischer Emulgatoren B1) erfolgt im allgemeinen bei Temperaturen von 40 bis 180 °C, vorzugsweise 50 bis 150 °C, unter Einhaltung eines NCO/OH-Äquivalent-Verhältnisses von 2:1 bis 400:1, vorzugsweise von 4:1 bis 140:1.

Bei der erstgenannten Variante der separaten Herstellung der nichtionischen Emulgatoren B1) werden diese vorzugsweise unter Einhaltung eines NCO/OH-Äquivalentverhältnisses von 2 : 1 bis 6 : 1 hergestellt. Bei der in situ-Herstellung der Emulgatoren B1) kann selbstverständlich ein hoher Überschuss an Isocyanatgruppen innerhalb des oben genannten breiten Bereichs zur Anwendung gelangen.

Die Reaktion der Silan- und Thioallophanatstrukturen aufweisenden Polyisocyanate A) mit den genannten hydrophilen Polyetheralkoholen zu nichtionischen Emulgatoren B1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen, bezogen auf die Summe aus Urethan- und Allophanatgruppen, weiter umgesetzt werden. In diesem Fall werden die Reaktionspartner im oben genannten NCO/OH-Äquivalentverhältnis bei Temperaturen von 40 bis 180 °C, vorzugsweise 50 bis 150 °C, in der Regel in Gegenwart der in den zitierten Patentschriften angeführten, zur Beschleunigung der Allophanatisierungsreaktion geeigneten Katalysatoren, insbesondere Zinkverbindungen, wie z. B. Zink-(II)-n-octanoat, Zink (II)-2-ethyl-1-hexanoat oder Zink-(II)-stearat, zur Reaktion gebracht.

Ein weiterer bevorzugter Typ geeigneter nichtionischer Emulgatoren B) stellen beispielsweise auch Umsetzungsprodukte von monomeren Diisocyanaten oder Diisocyanatgemischen mit den oben genannten ein- oder mehrwertigen hydrophilen Polyetheralkoholen in einem OH/NCO-Äquivalentverhältnis von 0,6 : 1 bis 1,2 : 1 dar. Insbesondere bevorzugt ist die Umsetzung von monomeren Diisocyanaten oder Diisocyanatgemischen mit reinen Polyethylenglycolmonomethyletheralkoholen, die im statistischen Mittel 5 bis 50, bevorzugt 5 bis 25 Ethylenoxideinheiten aufweisen. Die Herstellung solcher Emulgatoren B2) ist ebenfalls bekannt und beispielsweise in EP-B 0 486 881 beschrieben.

Gegebenenfalls können die Emulgatoren B2) aber auch im Anschluss an das Abmischen der Komponenten in den vorstehend beschriebenen Mengenverhältnissen in Gegenwart geeigneter Katalysatoren mit den Silan- und Thioallophanatstrukturen aufweisenden Polyisocyanaten A) unter Allophanatisierung umgesetzt werden. Dabei entstehen ebenfalls hydrophile Polyisocyanatzusammensetzung, die neben nicht umgesetztem Polyisocyanat A) einen sich in situ aus dem Emulgator B2) und einem Teil der Komponente A) bildenden weiteren nichtionischen Emulgatortyp B3) mit Allophanatstruktur enthalten. Auch die in situ-Herstellung solcher Emulgatoren B3) ist bereits bekannt und beispielsweise in WO 2005/047357 beschrieben.

Die erfindungsgemäßen, hydrophil-modifizierten Silan- und Thioallophanatstrukturen aufweisenden Polyisocyanate können anstelle der beispielhaft beschriebenen nichtionischen Emulgatoren auch Emulgatoren mit ionischen, insbesondere anionischen Gruppen enthalten.

Bei diesen ionischen Emulgatorkomponenten B) handelt es sich insbesondere um Umsetzungsprodukte aus mindestens einem Polyisocyanatmolekül der Silan- und Thioallophanatstrukturen aufweisenden Polyisocyanate A) mit einer Aminosulfonsäure.

Solche ionischen Emulgatoren B) stellen bevorzugt sulfonatgruppenhaltige Emulgatoren B4) dar, wie sie beispielsweise nach dem Verfahren der WO 01/88006 durch Umsetzung der Polyisocyanatkomponenten A) mit 2-(Cyclohexylamino)-ethansulfonsäure und/oder 3-(Cyclohexylamino)-propansulfonsäure oder auch mit 4-(Cyclohexylamino)-butansulfonsäure erhältlich sind. Diese Umsetzung findet in der Regel bei Temperaturen von 40 bis 150 °C, vorzugsweise 50 bis 130 °C, unter Einhaltung eines Äquivalent-Verhältnisses von NCO-Grup¬pen zu Aminogruppen von 2:1 bis 400:1, vorzugsweise von 4:1 bis 250:1, statt, wobei zur Neutralisation der Sulfonsäuregruppen tertiäre Amine, vorzugsweise in äquimolarer Menge bezogen auf die Menge an Aminosulfonsäure, mitverwendet werden. Geeignete Neutralisationsamine sind beispielsweise tertiäre Monoamine, wie z. B. Trimethylamin, Triethylamin, Tripropylamin, Tributylamin, Dimethylcyclohexylamin, Diisopropylethylamin, N-Methylmorpholin, N-Ethylmorpholin, N-Methylpiperidin, oder N-Ethylpiperidin, tertiäre Diamine, wie z. B. 1,3-Bis-(dimethylamino)-propan, 1,4-Bis-(dimethylamino)-butan oder N,N'-Dimethylpiperazin, oder, allerdings weniger bevorzugt, Alkanolamine, wie z. B. Dimethylethanolamin, Methyldiethanolamin oder Triethanolamin.

Wie bereits für die nichtionischen Emulgatoren B1) beschrieben, kann auch die Umsetzung der Silan- und Thioallophanatstrukturen aufweisenden Polyisocyanate A) mit den genannten Aminosulfonsäuren entweder in einem separaten Reaktionsschritt mit anschließendem Vermischen der erhaltenen ionischen Emulgatoren B4) mit den in eine hydrophile Form zu überführenden Polyisocyanatkomponenten A) oder aber in situ in diesen Polyisocyanatkomponenten erfolgen, wobei sich direkt ein erfindungsgemäßes, hydrophil-modifiziertes Silan- und Thioallophanatstrukturen aufweisendes Polyisocyanat bildet, das neben nicht umgesetztem Polyisocyanat A) den sich in situ aus den Aminosulfonsäuren, dem Neutralisationsamin und einem Teil der Komponenten A) bildenden Emulgator B4) enthält.

Ein weiterer bevorzugter Typ geeigneter Emulgatoren B) sind solche, die in einem Molekül gleichzeitig ionische und nichtionische Strukturen enthalten. Bei diesen Emulgatoren B5) handelt es sich z. B. um mit tertiären Aminen, wie z. B. den oben genannten Neutralisationsaminen neutralisierte Alkylphenolpolyglykoletherphosphate und -phosphonate oder Fettalkoholpolyglykoletherphosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolethersulfate oder Fettalkoholpolyglykolethersulfate.

Bevorzugt enthält die Emulgatorkomponente in diesem Fall wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats Alkylphenolpolyglykolethersulfats und/oder Fettalkoholpolyglykolethersulfats .

Unabhängig von der Art des Emulgators B) und dessen Herstellung wird dessen Menge bzw. die Menge der bei einer in situ-Herstellung des Emulgators den Polyisocyanaten A) zugesetzten ionischen und/oder nichtionischen Komponenten im allgemeinen so bemessen, dass die letztlich erhaltenen erfindungsgemäßen, hydrophil-modifizierten Silan- und Thioallophanatstrukturen aufweisenden Polyisocyanate eine die Dispergierbarkeit des Polyisocyanatgemisches gewährleistenden Menge an Emulgator B) enthalten.

Die Herstellung der aus Silan- und Thioallophanatstrukturen aufweisenden Polyisocyanaten A) sowie mindestens einem ionischen und/oder nichtionischen Emulgator B) bestehenden erfindungsgemäßen, hydrophil-modifizierten Silan- und Thioallophanatstrukturen aufweisenden Polyisocyanate kann lösemittelfrei oder gegebenenfalls in einem geeigneten, gegenüber Isocyanatgruppen inerten Lösemittel, beispielsweise den oben für die Thioallophanatisierung bei der Herstellung der Polyisocyanatkomponente A) als geeignet beschriebenen, erfolgen.

In einer weiteren bevorzugten Ausführungsform betrifft die Erfindung hydrophile Polyisocyanatzusammensetzungen, umfassend eine Polyisocyanatkomponente A) und eine Emulgatorkomponente B), dadurch gekennzeichnet, dass die Polyisocyanatkomponente A) aus wenigstens einem Silan- und Thioallophanatstrukturen aufweisenden Polyisocyanat der allgemeinen Formel (I) 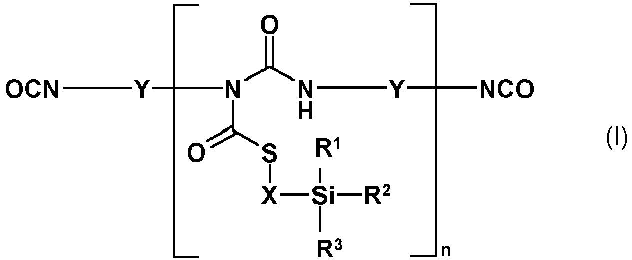 besteht, in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht und
- n: für eine ganze Zahl von 1 bis 20 steht,

und die Emulgatorkomponente B) wenigstens einen ionischen und/oder nichtionischen Emulgator enthält.

Ebenfalls bevorzugt betrifft die Erfindung hydrophile Polyisocyanatzusammensetzungen, umfassend eine Polyisocyanatkomponente A) und eine Emulgatorkomponente B), dadurch gekennzeichnet, dass die Polyisocyanatkomponente A) aus wenigstens einem Silan- und Thioallophanatstrukturen aufweisenden Polyisocyanat der allgemeinen Formel (I) 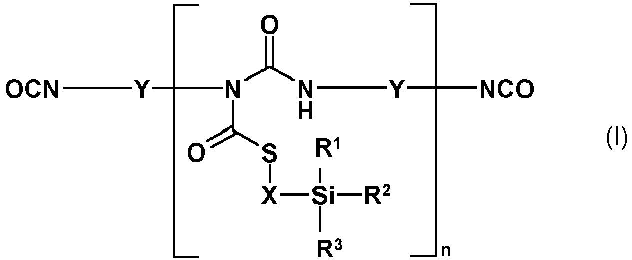 besteht, in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
- X: für einen Propylenrest (-CH₂-CH₂-CH₂-) steht
- Y: für einen linearen oder verzweigten, aliphatischen oder cycloaliphatischen Rest mit 5 bis 13 Kohlenstoffatomen steht und
- n: für eine ganze Zahl von 1 bis 20 steht,
und die Emulgatorkomponente B) wenigstens einen ionischen und/oder nichtionischen Emulgator enthält.

Ebenfalls bevorzugt betrifft die Erfindung hydrophile Polyisocyanatzusammensetzungen, umfassend eine Polyisocyanatkomponente A) und eine Emulgatorkomponente B), dadurch gekennzeichnet, dass die Polyisocyanatkomponente A) aus wenigstens einem Silan- und Thioallophanatstrukturen aufweisenden Polyisocyanat der allgemeinen Formel (I) 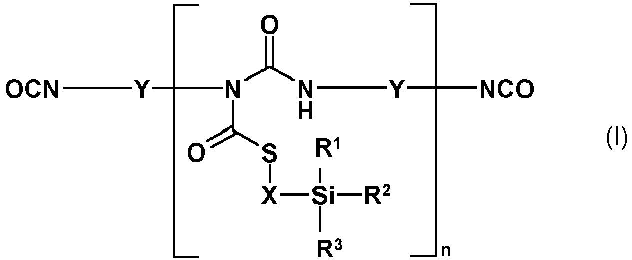 besteht, in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-) steht
- Y: für Pentan-1,5-diyl, Hexan-1,6-diyl, 3,3,5-Trimethylcyclohexan-5-methylen-1-yl, Dicyclohexylmethan-2,4'-diyl und/oder Dicyclohexylmethan-4,4'-diyl oder beliebige Gemische dieser Reste steht und
- n: für eine ganze Zahl von 1 bis 20 steht,
und die Emulgatorkomponente B) wenigstens einen ionischen und/oder nichtionischen Emulgator enthält.

Die erfindungsgemäßen, hydrophil-modifizierten Silan- und Thioallophanatstrukturen aufweisenden Polyisocyanate stellen wertvolle Ausgangsmaterialien zur Herstellung von Polyurethan-Kunststoffen nach dem Isocyanat-Polyadditionsverfahren dar.

Hierzu werden die Polyisocyanate vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen, hydrophil-modifizierten Silan- und Thioallophanatstrukturen aufweisenden Polyisocyanate als Vernetzer für in Wasser gelöste oder dispergierte Lack- oder Klebstoffbindemittel oder -bindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als geeignete Lack- oder Klebstoffbindemittel oder -bindemittelkomponenten zur Kombination mit den erfindungsgemäßen, hydrophil-modifizierten Silan- und Thioallophanatstrukturen aufweisenden Polyisocyanaten beispielhaft genannt: in Wasser gelöste oder dispergierte Polyacrylatpolyole, insbesondere solche des Molekulargewichtsbereichs 1 000 bis 20 000, hydroxyfunktionelle Polyacrylat/Polyurethan- und Polyester/Polyurethan-Hybriddispersionen, hydroxyfuntionelle Polyurethan/Polyharnstoff-Dispersionen, Polyesterpolyol-Dispersionen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgeäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte hydroxylgruppenfreie Polyurethane und/oder Polyharnstoffe, die aufgrund der in den Urethan- bzw. Harnstoffgruppen vorliegenden aktiven Wasserstoffatome mit Polyisocyanaten vernetzbar sind.

Ein weiterer Gegenstand der vorliegenden Erfindung ist ein Beschichtungsmittel enthaltend mindestens ein hydrophil-modifiziertes Silan- und Thioallophanatstrukturen aufweisendes Polyisocyanat.

Bei der erfindungsgemäßen Verwendung als Vernetzerkomponente für wäßrige Lack- oder Klebstoffbindemittel werden die erfindungsgemäßen, hydrophil-modifizierten Silan- und Thioallophanatstrukturen aufweisenden Polyisocyanate im Allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2,5:1, vorzugsweise 0,7:1 bis 2,0:1 entsprechen.

Gegebenenfalls können die erfindungsgemäßen hydrophil-modifizierten Silan- und Thioallophanatstrukturen aufweisenden Polyisocyanate in untergeordneten Mengen auch nichtfunktionellen wäßrigen Bindemitteln zur Erzielung ganz spezieller Eigenschaften, beispielsweise als Additiv zur Haftverbesserung zugemischt werden. In diesem Fall kommen die hydrophil-modifizierten Silan- und Thioallophanatstrukturen aufweisenden Polyisocyanate in der Regel in einer Menge von 1 bis 30 Gew.-%, vorzugsweise 3 bis 20 Gew.-%, besonders bevorzugt 5 bis 15 Gew.-%, bezogen auf die Gesamtmenge an eingesetztem Polyisocyanat und Bindemittel zum Einsatz.

Selbstverständlich können die erfindungsgemäßen hydrophil-modifizierten Silan- und Thioallophanatstrukturen aufweisenden Polyisocyanate auch in mit aus der Polyurethanchemie an sich bekannten Blockierungsmitteln blockierter Form in Kombination mit den obengenannten wäßrigen Bindemitteln oder Bindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, Diisopropylamin, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Sulfonatgruppen enthaltenden Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erfindungsgemäßen hydrophil-modifizierten Silan- und Thioallophanatstrukturen aufweisenden Polyisocyanaten formulierten wäßrigen Beschichtungsmittel, denen gegebenenfalls die üblichen Hilfs- und Zusatzmittel, wie z. B. Verlaufshilfsmittel, Lichtschutzmittel, Antioxidantien, Entschäumer, Netzmittel, Antiabsetzmittel, Verdicker, Farbstoffe, Farbpigmente, Füllstoffe, Mattierungsmittel, Weichmacher, Katalysatoren oder Hilfslösemitteln, zugesetzt werden können, schon bei Raumtemperaturtrocknung gute anwendungstechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Ein weiterer Gegenstand der vorliegenden Erfindung ist ein Substrat, beschichtet mit einem gegebenenfalls unter Wärmeeinwirkung ausgehärteten erfindungsgemäßen Beschichtungsmittel.

Als Vernetzerkomponente in wässrigen Beschichtungssystemen bieten die erfindungsgemäßen hydrophil-modifizierten Silan- und Thioallophanatstrukturen aufweisenden Polyisocyanate gegenüber den bisher bekannten hydrophilen Alkoxysilangruppen enthaltenden Polyisocyanaten des Standes der Technik insbesondere bezüglich der erzielbaren Haftung erhebliche Vorteile. Diese Tatsache ist besondere deshalb überraschend, da die erfindungsgemäßen hydrophilen Polyisocyanate in der Regel deutlich niedrigere Isocyanatfunktionalitäten von oftmals < 2 aufweisen.

Aufgrund ihrer hervorragenden Haftungseigenschaften eigenen sich mit den erfindungsgemäßen, hydrophil-modifizierten Silan- und Thioallophanatstrukturen aufweisenden Polyisocyanaten formulierte wässrige Beschichtungssysteme insbesondere auch zur Verklebung unterschiedlicher Materialien, wie z. B. Holz, Metall, Kunststoff, Papier, Textil, Keramik, Glas oder Stein.

Besonders geeignet sind die so formulierten wässrigen Polyurethandispersionsklebstoffe zur Verklebung unterschiedlicher Materialien bei der Herstellung von Mehrschichtverbunden, insbesondere von Mehrschichtverbunden mit mindestens einer Metallfolie, wie sie beispielsweise zur Verpackung von Lebensmitteln eingesetzt werden. Sie führen dabei zu hoher Wärmebeständigkeit der Verklebung und hohen Verbundfestigkeiten, die im Gegensatz zu Verklebungen, die mit den bisher bekannten hydrophilen Alkoxysilangruppen enthaltenden Polyisocyanaten des Standes der Technik als Vernetzer hergestellt wurden, unter den Bedingungen einer Heißsterilisation nicht nur erhalten bleiben sondern sich sogar noch einmal deutlich verbessern.

Die für das erfindungsgemäße Polyisocyanatgemisch als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele:

Alle Prozentangaben beziehen sich, soweit nichts Anderslautendes vermerkt, auf das Gewicht. Die Bestimmung der NCO-Gehalte erfolgte titrimetrisch nach DIN EN ISO 11909:2007-05. Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Restmonomerengehalte wurden nach DIN EN ISO 10283:2007-11 gaschromatographisch mit internem Standard gemessen.

Die Gehalte (mol-%) der im Silan- und Thioallophanatstrukturen aufweisendes Polyisocyanat A) enthaltenen Thiourethan, Thioallophanat und Isocyanurat wurden aus den Integralen protokonenentkoppelter ¹³C-NMR-Spektren (aufgenommen an einem Gerät Bruker DPX-400) errechnet und beziehen sich jeweils auf die Summe an vorliegenden Thiourethan-, Thioallophanat- und Isocyanuratgruppen. Die einzelnen Strukturelemente weisen gemessen in CDCl₃ folgende chemische Verschiebungen (in ppm) auf: Thiourethan: 166.8; Thioallophanat: 172.3 und 152.8; Isocyanurat: 148.4.

Die Verbundfestigkeit wurde mit einem Universalprüfgerät der Fa. FRANK-PTI GmbH (DE) bestimmt. Dazu wurden die Prüfkörper in die Klemmbacken der Zugprüfmaschine so eingespannt, dass das Canvas-Gewebe von der Aluminiumplatte im 180° Winkel abgezogen werden konnte. Die Aluminiumplatte wurde in die obere Klemmbacke und das Ende des überstehenden Canvas-Gewebe-Streifens in die untere Klemmbacke eingespannt. Die Zugprüfung wurde mit der Abzugsgeschwindigkeit 100 mm/min durchgeführt.

### Ausgangsverbindungen:

### Silan- und Thioallophanatstrukturen aufweisendes Polyisocyanat A)

756 g (4,5 mol) Hexamethylendiisocyanat (HDI) wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 294 g (1,5 mol) Mercaptopropyltrimethoxysilan zugetropft, wobei die Temperatur der Mischung aufgrund der exotherm einsetzenden Reaktion bis auf 85°C anstieg. Das Reaktionsgemisch wurde weiter bei 85°C gerührt bis der NCO-Gehalt nach ca. 2 h auf 24,0 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt.

Man erhielt 523 g eines praktisch farblosen klaren Silan- und Thioallophanatstrukturen aufweisenden Polyisocyanats, das folgende Kenndaten und Zusammensetzung aufwies:

| | |
|---|---|
| NCO-Gehalt: | 11,8 % |
| monomeres HDI: | 0,06 % |
| Viskosität (23°C): | 450 mPas |
| NCO-Funktionalität: | 2,0 |
| Thiourethan: | 0,0 mol-% |
| Thioallophanat: | 99,0 mol-% |
| Isocyanuratgruppen: | 1,0 mol-% |

### Polyurethan-Dispersionen

| | |
|---|---|
| Dispercoll U 42: | Wässrige Dispersion eines amorphen anionisch modifizierten Polyurethans auf Basis Polyesterpolyol; nichtflüchtiger Anteil 50% (Covestro Deutschland AG, Leverkusen; DE) |
| Dispercoll U XP 2643: | Wässrige Dispersion eines amorphen anionisch modifizierten Polyurethans auf Basis Polyetherpolyol; nichtflüchtiger Anteil 40% (Covestro Deutschland AG, Leverkusen; DE) |

### Beispiel 1 (erfindungsgemäß)

### Hydrophil-modifiziertes Silan- und Thioallophanatstrukturen aufweisendes Polyisocyanat, Emulgatortyp B1)

900 g (2,53 val) des vorstehend beschriebenen Silan- und Thioallophanatstrukturen aufweisenden Polyisocyanats A) wurden bei 80 °C unter trockenem Stickstoff und Rühren vorgelegt, innerhalb von 30 min mit 100 g (0,20 val) eines auf Methanol gestarteten, monofunktionellen Polyethylenoxidpolyethers eines mittleren Molekulargewichtes von 500 versetzt und bei dieser Temperatur weiter gerührt, bis der NCO-Gehalt der Mischung nach etwa 4 h auf einen Wert von 9,8 % gefallen war. Nach Abkühlen auf Raumtemperatur lag ein farbloses, klares Polyisocyanatgemisch mit folgenden Kenndaten vor:

| | |
|---|---|
| NCO-Gehalt: | 9,8 % |
| monomeres HDI: | 0,05 % |
| Viskosität (23 °C): | 500 mPas |
| NCO-Funktionalität: | 1,8 |

### Beispiel 2 (erfindungsgemäß)

### Hydrophil-modifiziertes Silan- und Thioallophanatstrukturen aufweisendes Polyisocyanat, Emulgatortyp B4)

980 g (2,53 val) des vorstehend beschriebenen Silan- und Thioallophanatstrukturen aufweisenden Polyisocyanats A) wurden bei 80 °C unter trockenem Stickstoff und Rühren mit 20 g (0,09 val) 3-(Cyclohexylamino)-propansulfonsäure, 11,5 g (0,09 val) Dimethylcyclohexylamin und 0,2 g (200 ppm) 2,6-Di-tert-butyl-4-methylphenol (lonol) versetzt und bei dieser Temperatur weiter gerührt, bis der NCO-Gehalt der Mischung nach etwa 3 h auf einen Wert von 11,0 % gefallen war. Nach Abkühlen auf Raumtemperatur lag ein farbloses, klares Polyisocyanatgemisch mit folgenden Kenndaten vor:

| | |
|---|---|
| NCO-Gehalt: | 11,0 % |
| monomeres HDI: | 0,06 % |
| Viskosität (23 °C): | 640 mPas |
| NCO-Funktionalität: | 1,9 |

### Beispiel 3 (Vergleich)

### Hydrophil-modifiziertes Silanstrukturen aufweisendes Polyisocyanat gemäß EP 1 544 226, Beispiel 2

690,3 g (3,58 val) Desmodur^{®} N 3400 (Polyisocyanat auf Basis von HDI, NCO-Gehalt: 21,8 %, Viskosität (23°C): 170 mPas; Hersteller: Covestro Deutschland AG) wurden bei 45 °C unter trockenem Stickstoff und Rühren vorgelegt, innerhalb von 20 min mit 122 g (0,22 val) eines auf Methanol gestarteten, monofunktionellen Polyethylenoxidpolyethers eines mittleren Molekulargewichtes von 550 versetzt und bei dieser Temperatur weiter gerührt, bis der NCO-Gehalt der Mischung nach etwa 6 h auf einen Wert von 17,3 % gefallen war. Anschließend wurden 171 g (0,49 val) eines nach Beispiel 1 der EP 1 544 226 hergestellten silanfunktionellen Aspartas (Additionsproduktes von 3-Aminopropyltrimethoxysilan an Maleinsäuerdiethylester) so zugegeben, dass die Temperatur des Reaktionsgemisches trotz der einsetzenden Exothermie 50°C nicht überstieg. Nach einer Reaktionszeit von 2 h bei 50°C und Abkühlen auf Raumtemperatur lag ein farbloses, klares Polyisocyanatgemisch mit folgenden Kenndaten vor:

| | |
|---|---|
| NCO-Gehalt: | 12,2 % |
| monomeres HDI: | 0,11 % |
| Viskosität (23 °C): | 680 mPas |
| NCO-Funktionalität: | 2,4 |

### Beispiel 4 (Vergleich)

### Hydrophil-modifiziertes Silanstrukturen aufweisendes Polyisocyanat gemäß EP 953 585, Beispiel G

855 g (4,68 val) eines isocyanuratgruppen enthaltenden Polyisocyanates auf Basis von HDI mit einem NCO-Gehalt von 23,0 % und einer Viskosität (23°C) von 1200 mPas wurden bei 70 °C unter trockenem Stickstoff und Rühren vorgelegt, innerhalb von 20 min mit 119 g (0,22 val) eines auf Methanol gestarteten, monofunktionellen Polyethylenoxidpolyethers eines mittleren Molekulargewichtes von 550 und 26 g (0,13 val) Mercaptopropyltrimethoxysilan versetzt und anschließend 3 h bei 80°C weiter gerührt. Nach Abkühlen auf Raumtemperatur und Zugabe von 5 g γ-Glycidyloxypropyltrimethoxysilan lag ein farbloses, klares Polyisocyanatgemisch mit folgenden Kenndaten vor:

| | |
|---|---|
| NCO-Gehalt: | 17,2% |
| monomeres HDI: | 0,08 % |
| Viskosität (23 °C): | 770 mPas |
| NCO-Funktionalität: | 3,0 |

### Beispiel 5 bis 10 (erfindungsgemäß und Vergleich)

Zur Herstellung wässriger zweikomponentiger Beschichtungsmittel zur Verwendung als Klebstoff wurden die Polyisocyanate aus Beispiel 1 bis 4 zu den oben genannten wässrigen Polyurethandispersionen zugegeben und die Gemische jeweils durch 5 minütiges Rühren von Hand homogenisiert.

Die so erhaltenen Dispersionsklebstoffe wurden mit einem Pinsel auf Aluminiumplatten (B x T x H = 50 mm x 120 mm x 1,7 mm) und auf Canvas-Gewebe-Streifen (30 mm x 240 mm) aufgetragen. Anschließend wurden die mit Dispersionsklebstoff beschichteten Canvas-Gewebe-Streifen in die Dispersionsschicht auf der Aluminiumplatte so eingelegt, dass die Canvas-Gewebe-Streifen 120 mm über die Aluminiumplatte hinausragten. Die Klebstoffschicht wurde bei 23°C / 50% rel. Feuchte getrocknet, wobei das Wasser durch das Canvas-Gewebe verdampfte.

Nach einer einwöchigen Lagerung bei Normklima wurde jeweils eine Hälfte der Klebeverbunde (pro Klebstoffdispersion) in einem Sterilisator Varioklav VI 400 EC (Fa. HP Labortechnik GmbH, Oberschleißheim, DE) bei 121°C über 30 min gemäß der Betriebsanleitung sterilisiert. Nach Entnahme aus dem Sterilisator wurden die Proben bei 23°C / 50% rel. Feuchte über 24 Std. getrocknet.

Anschließend erfolgte die Prüfung der Klebeverbunde auf Verbundfestigkeit. Die nachfolgende Tabelle 1 zeigt die Zusammensetzungen der Dispersionsklebstoffe in Gew.-Teilen und die Verbundfestigkeiten der Klebeverbunde vor und nach der Dampfsterilisierung jeweils als Mittelwert aus fünf Einzelmessungen.

**Tabelle 1:**

| | **5** | **6** | **7** | **8** | **9** (Vergleich) | **10** (Vergleich) |
|---|---|---|---|---|---|---|
| Dispercoll U 42 | 100 | 100 | | | | |
| Dispercoll U XP 2643 | | | 100 | 100 | 100 | 100 |
| Polyisocyanat aus Beispiel 1 | 6 | | 6 | | | |
| Polyisocyanat aus Beispiel 2 | | 6 | | 6 | | |
| Polyisocyanat aus Beispiel 3 | | | | | 6 | |
| Polyisocyanat aus Beispiel 4 | | | | | | 6 |
| Verbundfestigkeit vor Sterilisierung [N/mm] | 0,52 | 0,41 | 0,29 | 0,34 | 0,20 | 0,24 |
| Verbundfestigkeit nach Sterilisierung [N/mm] | 0,55 | 0,66 | 0,48 | 1,53 | 0,18 | 0,33 |
| Änderung Verbundfestigkeit [%] | 6 | 61 | 66 | 350 | -10 | 38 |

Die erfindungsgemäßen Beispiele 5 bis 8 zeigen, dass sich die Verbundfestigkeit der unter Verwendung hydrophil-modifizierter Silan- und Thioallophanatstrukturen aufweisender Polyisocyanate hergestellten Mehrschichtverbunde unter Sterilisationsbedingungen in allen Fällen erhöht. Der Vergleich der Beispiele 7 und 8 mit den Vergleichbeispielen 9 und 10 zeigt, dass bei Klebeverbunden, die unter Verwendung der erfindungsgemäßen Polyisocyanate erhalten wurden, durch die Sterilisation eine erhebliche Erhöhung der Verbundfestigkeit eintritt (erfindungsgemäße Beispiele 7 und 8), während die Verwendung der hydrophil-modifizierten Silanstrukturen aufweisenden Polyisocyanate des Standes der Technik (Vergleichsbeispiele 9 und 10) nur zu einer sehr geringen Zunahme bzw. zu einer Abnahme der Festigkeit führt.

## Patentansprüche

1. Hydrophile Polyisocyanatzusammensetzung, umfassend eine Polyisocyanatkomponente A) und eine Emulgatorkomponente B), **dadurch gekennzeichnet, dass** die Polyisocyanatkomponente A) aus wenigstens einem Silan- und Thioallophanatstrukturen aufweisenden Polyisocyanat der allgemeinen Formel (I) 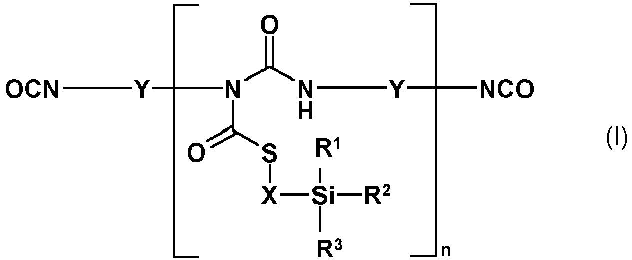 besteht, in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht,
Y einen linearen oder verzweigten, aliphatischen oder cycloaliphatischen, einen araliphatischen oder aromatischen Rest mit bis zu 18 Kohlenstoffatomen bedeutet und
n für eine ganze Zahl von 1 bis 20 steht,
und die Emulgatorkomponente B) wenigstens einen ionischen und/oder nichtionischen Emulgator enthält.

2. Hydrophile Polyisocyanatzusammensetzung gemäß Anspruch 1, **dadurch gekennzeichnet, dass** die Polyisocyanatkomponente A) durch Umsetzung
C) mindestens eines monomeren Diisocyanates der allgemeinen Formel (II)
**OCN-Y-NCO** (II),
in welcher Y einen linearen oder verzweigten, aliphatischen oder cycloaliphatischen, einen araliphatischen oder aromatischen Rest mit bis zu 18 Kohlenstoffatomen bedeutet, mit
D) Mercaptosilanen der allgemeinen Formel (III) 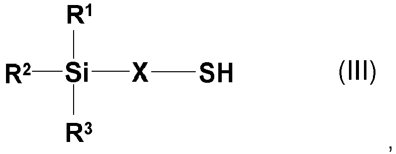
in welcher
R¹, R², R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
X für einen linearen oder verzweigten organischen Rest mit mindestens 2 Kohlenstoffatomen steht,
in einem Äquivalentverhältnis von Isocyanatgruppen zu Mercaptogruppen von 2 : 1 bis 40 : 1. hergestellt wird.

3. Hydrophile Polyisocyanatzusammensetzung gemäß Anspruch 2, **dadurch gekennzeichnet, dass** es sich bei dem monomeren Diisocyanat C) der allgemeinen Formel (II) um 1,5-Diisocyanaotopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate handelt.

4. Hydrophile Polyisocyanatzusammensetzung gemäß Anspruch 2 und 3, **dadurch gekennzeichnet, dass** es sich bei den Mercaptosilanen D) der allgemeinen Formel (III) 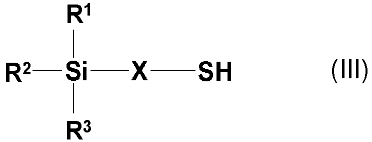 um solche handelt, in welchen
R1, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, vorzugsweise für jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, besonders bevorzugt jeweils Methyl, Methoxy oder Ethoxy bedeuten, mit der Maßgabe, daß mindestens einer der Reste R¹, R² und R³ für einen Methoxy- oder Ethoxyrest steht, und
X für einen linearen oder verzweigten Alkylenrest mit 2 bis 10 Kohlenstoffatomen, vorzugsweise für einen Propylenrest (-CH₂-CH₂-CH₂-) steht.

5. Hydrophile Polyisocyanatzusammensetzung gemäß einem der Ansprüche 1 bis 4, **dadurch gekennzeichnet, dass** die Polyisocyanatkomponente A) einen NCO-Gehalt von 2,0 bis 18,0 Gew.-%, vorzugsweise 7,0 bis 17,0 Gew.-%, besonders bevorzugt 10,0 bis 16,0 Gew.-%, und/oder eine mittlere NCO-Funktionalität von 1,8 bis 3,0, vorzugsweise von 1,8 bis 2,5, besonders bevorzugt von 1,9 bis 2,0, aufweist.

6. Hydrophile Polyisocyanatzusammensetzung gemäß einem der Ansprüche 1 bis 5, **dadurch gekennzeichnet, dass** die Emulgatorkomponente B) wenigstens ein Umsetzungsprodukt aus mindestens einem Polyisocyanat der Polyisocyanatkomponente A) mit einem hydrophilen Polyetheralkohol umfasst.

7. Hydrophile Polyisocyanatzusammensetzung gemäß Anspruch 6, **dadurch gekennzeichnet, dass** der hydrophile Polyetheralkohol ein Polyethylenglycolmonomethyletheralkohol ist, der im statistischen Mittel 5 bis 50 und bevorzugt 5 bis 25 Ethylenoxideinheiten enthält.

8. Hydrophile Polyisocyanatzusammensetzung gemäß einem der Ansprüche 1 bis 5, **dadurch gekennzeichnet, dass** die Emulgatorkomponente B) wenigstens ein Umsetzungsprodukt aus mindestens einem Polyisocyanat der Polyisocyanatkomponente A) mit einer Aminosulfonsäure umfasst.

9. Hydrophile Polyisocyanatzusammensetzung gemäß Anspruch 8, **dadurch gekennzeichnet, dass** die Aminosulfonsäure aus der Gruppe von 2-(Cyclohexylamino)-ethansulfonsäure, 3-(Cyclohexylamino)-propansulfonsäure und 4-(Cyclohexylamino)-butansulfonsäure ausgewählt wird.

10. Hydrophile Polyisocyanatzusammensetzung gemäß Anspruch 1 bis 5, **dadurch gekennzeichnet, dass** die Emulgatorkomponente B) wenigstens ein Alkali- oder Ammoniumsalz eines Alkylphenolpolyglykoletherphosphats, Alkylphenolpolyglykoletherphosphonats, Fettalkoholpolyglykoletherphosphats, Fettalkoholpolyglykoletherphosphonats Alkylphenolpolyglykolethersulfats und/oder Fettalkoholpolyglykolethersulfats umfasst.

11. Verfahren zur Herstellung der hydrophilen Polyisocyanatzusammensetzung gemäß einem der Ansprüche 1 bis 10, **dadurch gekennzeichnet, dass** die Polyisocyanatkomponente A) mit der Emulgatorkomponente B) vermischt wird oder die Emulgatorkomponente B) durch anteilige Umsetzung von Polyisocyanaten der Polyisocyanatkomponente A) mit ionischen und/oder nichtionischen Verbindungen, die gegenüber Isocyanatgruppen reaktive Gruppen tragen, in der Polyisocyanatkomponente A) gebildet wird.

12. Verwendung der hydrophilen Polyisocyanatzusammensetzung gemäß einem der Ansprüche 1 bis 10 zur Herstellung von Polyurethankunststoffen.

13. Beschichtungsmittel, enthaltend wenigstens eine hydrophile Polyisocyanatzusammensetzung gemäß einem der Ansprüche 1 bis 10 sowie wenigstens eine gegenüber Isocyanatgruppen reaktive Verbindung und gegebenenfalls weitere Hilfs- und Zusatzstoffe.

14. Beschichtung, erhältlich durch Verwendung eines Beschichtungsmittels gemäß Anspruch 13.

15. Verwendung eines Beschichtungsmittels gemäß Anspruch 13 zur Verklebung gleicher oder unterschiedlicher Materialien, insbesondere bei der Herstellung von Mehrschichtverbunden, besonders bevorzugt von Mehrschichtverbunden mit mindestens einer Metallfolie.
